# EUROPÄISCHE PATENTSCHRIFT

(11) **EP 1 583 904 B1**
(45) Veröffentlichungstag und Bekanntmachung des Hinweises auf die Patenterteilung: **02.10.2013**
(21) Anmeldenummer: 03814464.8
(22) Anmeldetag: 19.12.2003
(51) Int. Cl.: F03D 1/06

(54) **WINDTURBINENROTORBLATT MIT VERRINGERTER SCHALLEMISSION**
ROTOR BLADE FOR A WIND POWER PLANT
PALE DE ROTOR CONCUE POUR UNE INSTALLATION D'ENERGIE EOLIENNE

(30) Priorität: 02.01.2003 DE 10300284; 31.01.2003 DE 10303824
(43) Veröffentlichungstag der Anmeldung: 12.10.2005
(60) Teilanmeldung: 12159358.6
(73) Patentinhaber: Wobben Properties GmbH, 26605 Aurich (DE)
(72) Erfinder: Wobben Aloys, 26607 Aurich (DE)
(74) Vertreter: Eisenführ, Speiser & Partner
(86) Internationale Anmeldenummer: PCT/EP2003/014621
(87) Internationale Veröffentlichungsnummer: WO 2004/061298

(56) Entgegenhaltungen:
- DE-A- 4 436 197
- DE-A- 4 440 744
- DE-A- 19 738 278
- DE-A- 19 963 252
- US-A- 4 324 530
- US-A- 5 584 661
- US-A- 6 116 857
- US-A1- 2004 028 528
- ANTONIOU I ET AL: "A THEORETICAL AND EXPERIMENTAL INVESTIGATION OF NEW TIP SHAPES" EUROPEAN COMMUNITY WIND ENERGY CONFERENCE, XX, XX, 1993, Seiten 280-285, XP000606077

## Beschreibung

Die vorliegende Erfindung betrifft ein Rotorblatt für eine Windenergieanlage, mit einem eine Rotorblattvorderkante und eine Rotorblatthinterkante aufweisenden aerodynamischen Profil. Weiterhin betrifft die vorliegende Erfindung eine Rotorblattspitze für ein Rotorblatt mit einem eine Druck- und eine Saugseite aufweisenden aerodynamischen Profil, wobei die Rotorblattspitze in ihrem Endbereich in Richtung der Druckseite des Rotorblattes abgebogen oder abgewinkelt ist.

Solche Rotorblätter und Rotorblattspitzen sind im Stand der Technik seit langer Zeit bekannt, Insbesondere abgebogene Rotorblattspitzen werden z. B. bei Rotorblättern des Herstellers Enercon seit einiger Zeit verwendet. Diese bekannten Rotorblattspitzen sollen die zwangsläufig am Rotorblattende entstehenden Randwirbel verringern und damit die Entstehung unerwünschten Schalls verringern.

Als Stand der Technik wird an dieser Stelle allgemein auf folgende Druckschriften hingewiesen: DE 197 38 278; DE 197 43 694; DE 44 40 744; DE 196 14 420 sowie DE 44 36 197. Auch wird verwiesen auf das Dokument "A Momentum Theory for Winglets on Horizontal Axis Windturbine Rotors and some Comparison with Experiments", G.J.W. van Bussel, Fourth IEA Symposium on the Aerodynamics of Wind Turbines Rome, November 19-20 1990, sowie auf "Numerical Analysis oft the Horizontal Axis Wind Turbine with Winglets", H. Imamura et al, JSME International Journal, Vol. 41, Nr. 1, 1998 und auf "Development and Teesting of Tip Devices for Horizontal Axis Wind Turbines", G.W, Gyatt et al, May 1985.

Weiterhin sind Rotorblätter der eingangs genannten Art bekannt, deren Spitzen elliptisch auslaufen. Auch diese Ausbildung der Rotorblattspitzen soll vom Rotorblatt bzw. insbesondere von dessen Spitze ausgehende Schallemissionen verringern.

Da Windenergieanlagen inzwischen keine Einzelphänomene mehr sind, sondern vielerorts anzutreffen sind, finden sie sich auch zunehmend in der Nähe von Wohngebieten. Gerade dort ist die Akzeptanz von Windenergieanlagen u.a. von der Schallemission abhängig und es ist leicht nachvollziehbar, dass leisere Windenergieanlagen eher akzeptiert werden als laute.

Aufgabe der vorliegenden Erfindung ist es daher, die Schallemissionen von Windenergieanlagen weiter zu verringern,

Diese Aufgabe wird mit einer Rotorblattspitze eines Rotorblatts einer Windenergieanlage mit den Merkmalen nach Anspruch 1 gelöst. Vorteilhafte Weiterbildungen sind in den weiteren Ansprüchen angegeben.

Dieser erfindungsgemäßen Ausbildung der Rotorblattspitze liegt die Erkenntnis zugrunde, dass durch die sich verringernde Blatttiefe eine verringerte Umströmung der Blattspitze erfolgt, da sich deren Energie vorher auf die Hinterkantenwirbel verteilt, aber gleichzeitig auch die wirksame Rotorblattoberfläche verringert wird. Durch das Abwinkeln der Rotorblattspitze bleibt die wirksame Rotorblatttiefe bis zur abgewinkelten Rotorblattspitze hin optimal. Der sich zuspitzende Bereich verläuft in einem vorgegebenen, bevorzugten Winkel von der Rotorblattebene weg in Richtung der Druckseite des Rotorblatttes. Dabei wird der Wirbel an der Rotorblattspitze gleichzeitig aus der Rotorblattebene herausgelöst und in eine andere Ebene vorlegt. Dies wirkt sich wiederum günstig auf die Schallemission des mit einer solchen Spitze ausgestatteten Rotorblattes aus und verringert gleichzeitig am Rotorblatt auftretende Verluste. Dies betrifft sowohl die Randwirbelverluste und den aerodynamischen WirKungsgrad, der sich durch eine geeignete Auslegung verbessern lässt, wie auch eine günstige Gestaltung des Druckgefälles zwischen Druck- und Saugseite.

Besonders bevorzugt ist der Außenbereich der Rotorblattspitze aus der Horizontalen in einem Winkel von ca. 70° bis 90° aus der Horizontalen abgebogen. Anders ausgedrückt schließt die Rotorblattspitze mit dem Rotorblatt einen Winkel von ca. 110° bis 90° ein. Bei empirischen Untersuchungen haben sich bei diesen Winkeln die günstigsten Ergebnisse gezeigt.

In einer besonders bevorzugten Weiterbildung ist die erfindungsgemäße Rotorblattspitze als selbständiges, in das Rotorblatt einsetzbares Teil ausgestaltet. Darüber hinaus ist die Rotorblattspitze hohl ausgeführt und besteht bevorzugt aus Metall, insbesondere Aluminium. Durch die hohle Ausführung kommt es zu einer Gewichtsverringerung und damit zu einer leichteren Handhabbarkeit.

Darüber hinaus kann eine hohle Rotorblattspitze ebenso wie ein oben beschriebener, hohler Endbereich eines Rotorblattes, z. B. zur Beseitigung bzw. Verminderung von Eisensatz, von Warmluft durchströmt werden.

Außerdern kann eine aus Metall hergestellte Rotorblattspitze als Blitzfänger dienen und somit gefangene Blitze in eine geeignete Ableltvorrichtung weiterleiten, um dadurch die Windenergieanlage im Fall eines Blitzeinschlages wirksam zu schützen.

Vorteilhafte Weiterbildungen der Erfindung sind in den Unteransprüchen angegeben.

Nachfolgend wird die Erfindung anhand der Figuren näher beschrieben. Dabei zeigen:
- Figur 1: eine Draufsicht auf ein erfindungsgemäßes Rotorblatt mit einem abgehobenen Endbereich gemäß einer ersten Ausführungsform der Erfindung;
- Figur 2: ein erfindungsgemäßes Rotorblatt mit einem abgebogenen Endbereich gemäß einer zweiten, bevorzugten Ausführungsform der Erfindung;
- Figur 3: eine weitere Darstellung der zweiten Ausführungsform der Erfindung;
- Figur 4: noch eine weitere Darstellung der zweiten Ausführungsform;
- Figur 5: eine dritte Ausführungsform eines gefeilten Rotorblattes;
- Figur 6: eine Seitenansicht einer erfindungsgemäßen Rotorblattspitze;
- Figur 7: eine Vorderansicht einer Ausführungsform einer erfindungsgemäßen Rotorblattspitze;
- Figur 8: eine Vorderansicht einer alternativen Ausführungsform einer erfindungsgemäßen Rotorblattspitze;
- Figur 9: eine Vorderansicht einer alternativen Ausführungsform einer erfindungsgemäßen Rotorblattspitze; und
- Figur 10: eine Darstellung eines Rotorblattes mit einem erfindungsgemäß ausgebildeten Endbereich und einer erfindungsgemäßen Rotorblattspitze.

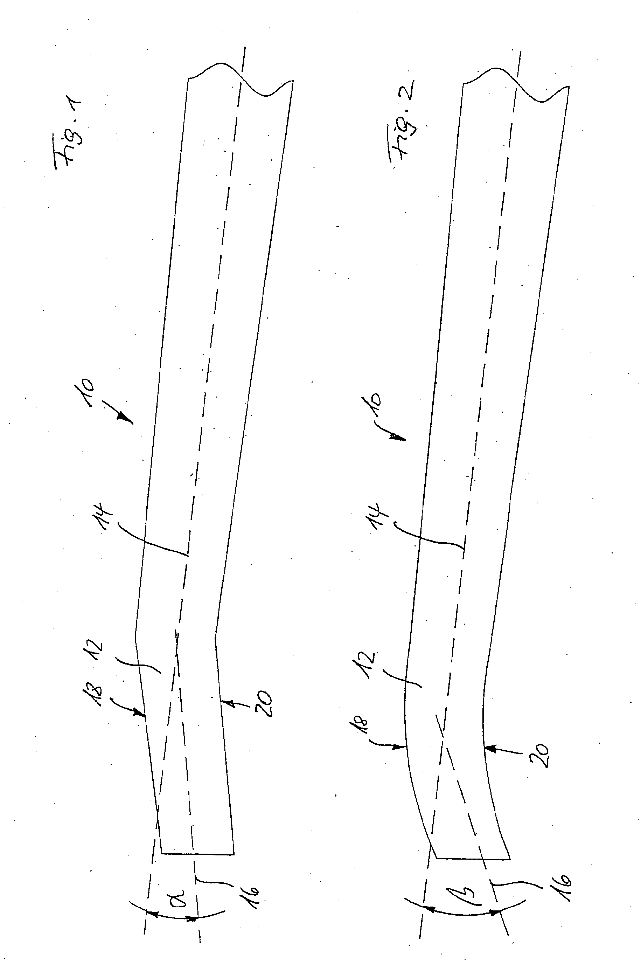

In Figur 1 ist ein erfindungsgemäßes Rotorblatt 10 einer Windenergieanlage gezeigt, In diesem Rotorblatt 10 ist die Fädelachse 14 angedeutet. Die Fädelachse 14 ist eine gedachte Achse, auf die alle Teile eines Rotorblattes 10 aufzufädeln sind, damit sich die gewünschte Rotorblatfform ergibt.

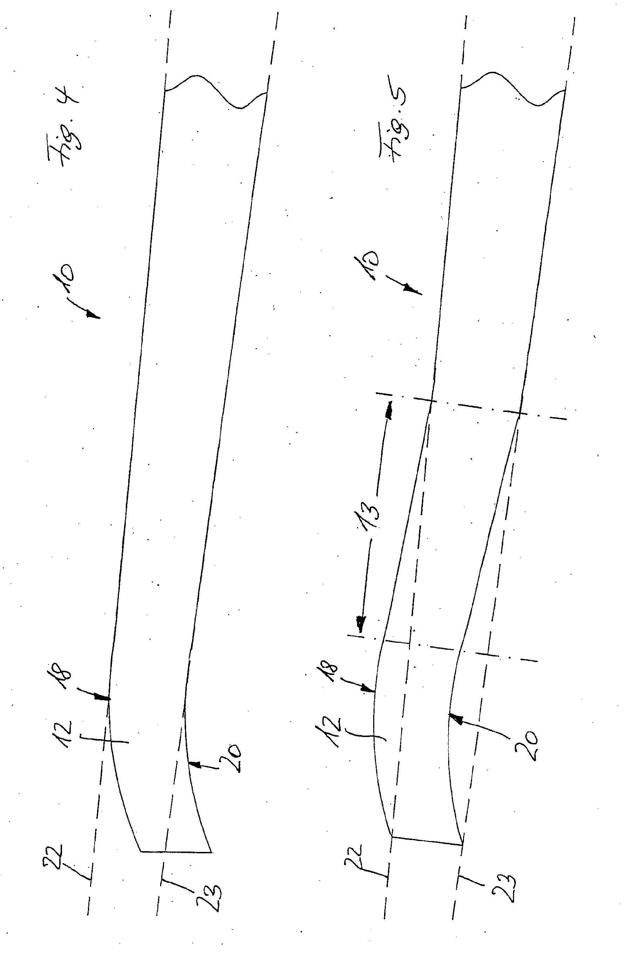

Der Endbereich 12 des Rotorblattes 10 ist in einem vorgegebenen Winkel α gegenüber einer ersten Fädelachse 14 abgeknickt. Für den Endbereich 12 ist eine zweite Fädelachse 16 dargestellt und zwischen den beiden Fädelachsen 14. 16 Ist der Winkel α angegeben. Dieser betrage in dieser Figur 5 Grad, Dieses Maß stellt einen akzeptablen Kompromiss zwischen verringerter Schallemission und erhöhter Belastung dar.

Dabei ist der Endbereich in der Rotorblattebene in Richtung der Rotorblatt-Hinterkante 20 abgeknickt. Dieses Abknicken führt einerseits zu einer längeren Hinterkante und damit zu einer breiteren Verteilung der Wirbelenergie. Andererseits löst sich die Strömung an der Hinterkante des Rotorblattes 10 in dem abgeknickten Endbereich 12 später ab als in dem geraden Bereich des Rotorblattes 10. Dadurch entstehen die Geräusche erzeugenden Wirbel entsprechend später.

Eine verbesserte Ausführungsform eines erfindungsgemäßen Rotorblattes 10 Ist In Figur 2 gezeigt. Auch in dieser Figur sind die Fädelachsen 14, 16 eingezeichnet. Allerdings erfolgt der Übergang vom Rotorblatt 10 in den Endbereich 12 hier nicht in einem scharfen Knick, sondern verläuft eher stetig in Form einer Krümmung. Allerdings nimmt die Krümmung zur Rotorblattspitze hin zu. Der Krümmungsradius wird also zur Rotorblattspitze hin kleiner.

In dem Endbereich 12 ist in diesem Fall der Bogentangente an der Spitze der Rotorblatthinterkante 20 und zur Rotorblattmitte hin parallelverschoben. Zwischen den Fädelachsen 14, 16 Ist ein Winkel 3 angegeben, Dieser betrage 10 Grad.

Diese 10 Grad ergeben sich eben aus dem Verlauf der Bogentangente an der Rotorblattspitze, wobei die ausgeführte Fellung des Rotorblattes 10 aber nicht größer ist, als bei dem in Figur 1 dargestellten Rotorblatt 10. Entsprechend weicht das aerodynamische Verhalten von dem in Figur 1 gezeigten Rotorblatt nur geringfügig ab, während das akustische Verhalten aber aufgrund des größeren Winkels β besser ist.

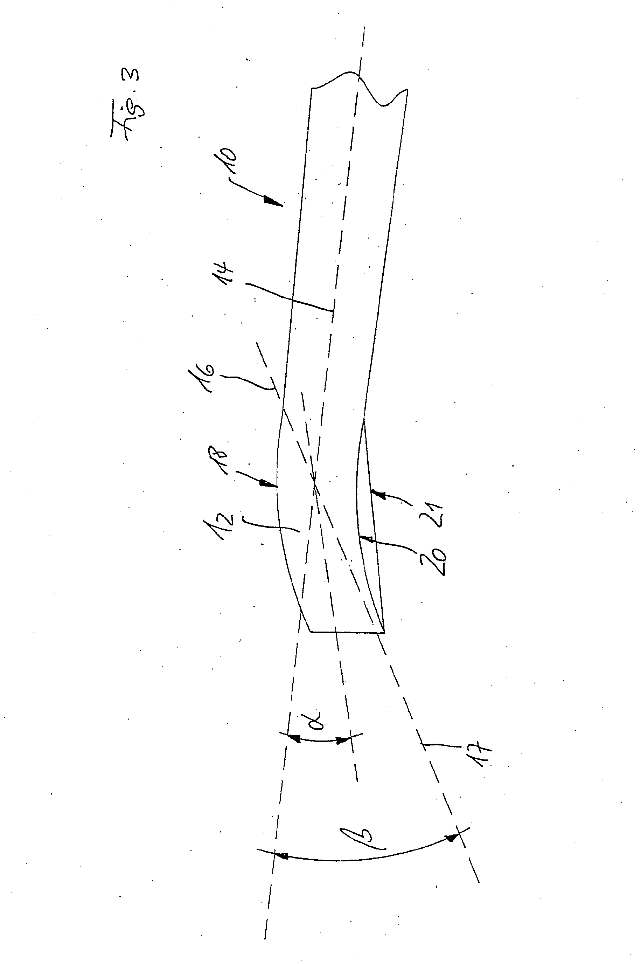

Dieser vorstehend dargelegte Sachverhalt wird anhand von Figur 3 noch eingehender erläutert. In dieser Figur ist insbesondere der Endbereich 12 des Rotorblattes 10 dargestellt. Die Hinterkante des Endbereiches 12 ist dabei einmal entsprechend der in Figur 1 gezeigten Ausführungsform abgeknickt dargestellt. Diese Variante ist mit den Bezugszeichen 21 bezeichnet. Gleichzeitig ist auch die Ausführungsform mit der gebogenen Hinterkante 20 dargestellt.

Hier Ist deutlich erkennbar, dass die äußerste Rotorblattspitze an den Hinterkanten 20 und 21 jeweils am gleichen Punkt liegt; die Rotorblatttiefe ist also aus aerodynamischer Sicht unverändert.

In dieser Figur ist weiterhin die erste Fädelachse 14 (ursprüngliche Blattfädelachse) angegeben, Weiterhin ist die parallel verschobene Bogentangente 17 und die zweite Fädelachse 16 (Tip-Fädelachse) entsprechend der Hinterkante 21 des Endbereichs eingetragen. Die Winkel α und β sind ebenfalls dargesteilt. Der Winkel α betrage wiederum 5 Grad. Er wird gebildet durch die erste Fädelachse 14 des Rotorblattes 10 und die zweite Fädelachse 16 entsprechend der in Figur 1 gezeigten Ausführungsform des Rotorblattes. Der Winkel β ist eingeschlossen zwischen der ersten Fädelachse 14 und der Bogentangente 17 entsprechend der in Figur 2 dargestellten Ausführurigsform. Der Winkel β betrage 10 Grad,

Hier ist also der Vorteil der In Figur 2 dargestellten Ausführungsform besonders gut erkennbar.

Figur 4 zeigt nochmals das erfindungsgemäß gefeilte Rotorblatt 10 mit der Vorderkante 18, der Hinterkante 20 und dem in Richtung der Hinterkante 20 gefeilten Endbereich 12, Weiterhin sind in dieser Figur zwei Linien 22, 23 dargestellt, die den Verlauf der Vorderkante 18 und der Hinterkante 20 ohne den gefeilten Endbereich 12 darstellen. Bereits in dieser Figur ist gut zu erkennen, in welche Maß der Endbereich 12 durch die Feilung in Richtung der Hinterkante 20 des Rotorblattes 10 gefeilt ist.

In Figur 5 ist eine alternative Ausführungsform des erfindungsgemäßen Rotorblattes 10 gezeigt, dass sich von dem in Figur 4 dargestellten durch einen mittleren Abschnitt 13 unterscheidet, der in Richtung der Vorderkante 18 des Rotorblattes 10 gefeilt ist. Natürlich gilt auch für diese Feilung der Vorteil des fließenden Übergangs zwischen den einzelnen Bereichen des Rotorblattes 10. Dabei ist diese Feilung in Richtung der Vorderkante 18 so bemessen, dass der äußerste Punkt des in Richtung der Hinterkante 20 gefeilten Endbereiches 12 des Rotorblattes wieder innerhalb der gestrichelten Linien 22, 23 liegt, welche auch in dieser Figur den gedachten, geradlinigen Verlauf des Rotorblattes angeben.

Daraus resultieren einander entgegengesetzt wirkende Torsionsmomente in dem Endbereich 12 und dem mittleren Bereich 13 des Rotorblattes, die sich bei geeigneter Bemessung in ihrer Wirkung am Rotorblattanschluss aufheben.

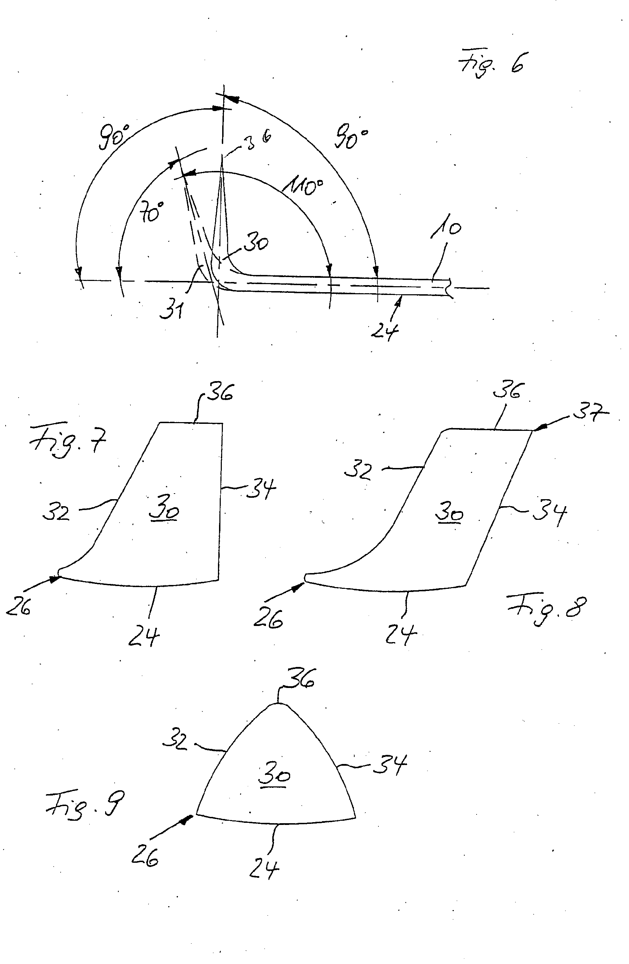

Figur 6 zeigt ein Rotorblatt 10 mit einem erfindungsgemäßen Randbogen 30, der von der Saugseite 24 des Rotorblattes 10 weg, also zur Druckseite des Rotorblattes 10 hin verläuft. Die Oberkante 36 des Randbogens weist eine möglichst geringe Profildicke auf, um den sich dort ablösenden Randwirbel so gering wie möglich zu halten, damit eine ebenfalls möglichst geringe Schallemission entsteht.

Der Randbogen 30 ist bevorzugt in einem Winkel von ca. 60° bis 90° aus der Horizontalen abgebogen. D. h., er schließt mit dem Rotorblatt einen Winkel zwischen 120° und 90° ein. Dieser Bereich wird durch zwei aufwärts abgebogene Abschnitte 30, 31 dargestellt, von denen einer mit einer gestrichelten Linie dargestellt ist.

In Figur 7 ist eine erste Ausführungsform des erfindungsgemäßen Randbogens 30 in der Vorderansicht dargestellt. In dieser Figur verläuft die Hinterkante 34 des Randbogens 30 sowie die Oberkante 36 des Randbogens geradlinig, während die Vorderkante 32 zwischen der Rotorblatt-Vorkante 26 und der Randbogen-Oberkante 36 von der Saugseite 24 des Rotorblattes weg mit einem vorgegebenen Winkel verläuft. Dadurch verkürzt sich die Randbogen-Oberkante 36 gegenüber der Tiefe des Rotorblattes, erkennbar an der Rotorblatt-Saugseite 24. Das Rotorblatt hat also bis zum Randbogen 30 hin seine aerodynamisch voll wirksame Tiefe und geht erst im Randbogen 30 in eine kürzere Randbogen-Oberkante 36.

Gleichzeitig wird der an der Rotorblatt-Oberkante 36 abreißende Randwirbel aus der Ebene des Rotorblattes 10 herausgeführt, so dass der Randwirbel von der Blattebene weggeführt wird.

Figur 8 zeigt eine alternative Ausführungsform des in Figur 7 gezeigten Randbogens. Während in Figur 7 eine im Wesentlichen senkrecht zur Rotorblattlängsachse verlaufende Randbogen-Hinterkante 34 dargestellt ist, ist auch dieser Randbogen in Figur 8 in Richtung der Hinterkante 34 gefeilt. Durch diese Feilung wird der Ablösepunkt 37, in dem sich die Strömung von diesem Randbogen löst, noch weiter nach hinten verlegt und entsprechend wird die Energie der Randwirbel noch weiter verteilt und die Schallemission Ist noch weiter verringert.

Das Wirkprinzip ist bei der in Figur 9 gezeigten Ausführungsform des Randbogens 30 ähnlich. Allerdings ist dieser Randbogen 30 auf einen möglichst geringen Randwirbel hin optimiert. Dazu verlaufen die Randbogen-Vorderkante 32 und die Randbogen-Hinterkante 34 mit einer vorgegebenen geschwungenen, besonders bevorzugt elliptischen Steigung zu der Randbogen-oberkante 36 hin. Dabei ist die Randbogen-Oberkante 36 wiederum von der Rotorblatt-Saugseite 24 fort, also zu der Druckseite hin aus der Rotor blattebene abgebogen.

Durch die elliptische Ausbildung der Rundbogen-Vorderkante 32 und der Randbogen-Hinterkante 34 wird gleichzeitig die Strecke verlängert, auf welcher sich die Strömung vom Rotorblatt löst. Dies führt ebenfalls zu einer verringerten Schallemission, da eine Umströmung der Blattspitze anders als bei stumpf auslaufenden Blattgeometrien weitestgehend entfällt.

Das Verhältnis von Tiefe zu Höhe (die Tiefe ist in Fig. 9 in der Aufsicht die Breite) des abgewinkelten Abschnitts des Randbogens beträgt etwa 1:0,8 bis 1,2, bevorzugt 1:1. Das Verhältnis der Höhe des abgewinkelten Abschnitts des Randbogens zur Tiefe des Rotorblatts am Anschluss des Randbogens beträgt etwa 1:1 bis 1:1,3, bevorzugt 1:1,14. Dabei ist der Tiefenverlauf im abgewinkelten Abschnitt des Randbogens annähernd hyperbolisch (in der Aufsicht die Profilbreite) und der oberste Kappenpunkt des äußersten Profilschnittes liegt bei etwa 30 bis 40%, bevorzugt 33% Profiltiefe, bezogen auf die Fädelachse des Blattes.

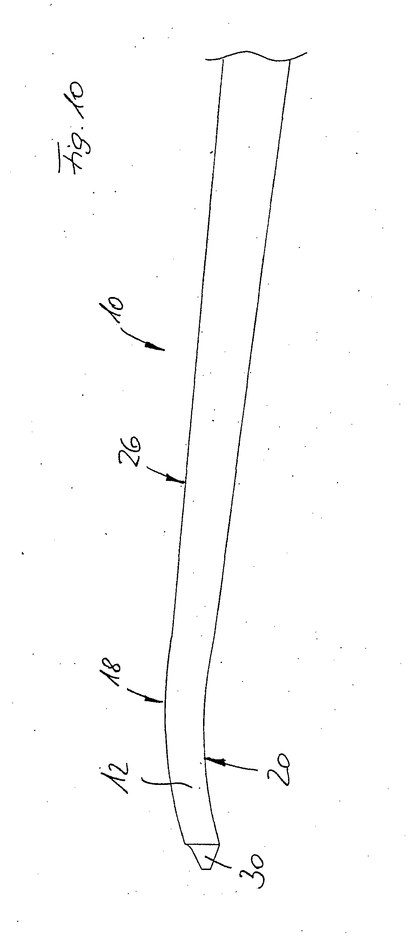

Figur 10 zeigt ein Rotorblatt 10 mit einer Kombinatin aus abgebogenem Endbereich 12 und daran anschließenden Randbogen 30. Dabei ist die Abbiegung des Endbereiches 12 von der Vorderkante 26 des Rotorblattes hin zu der Hinterkante 20 sowie eine Abbiegung des Randbogens 30 aus der Rotorblattebene heraus deutlich erkennbar, Entsprechend vereinigen sich hier die vorteilhaften akustischen Wirkungen des abgebogenen Endbereichs 12 einerseits und des abgewinkelten Randbogens 30 andererseits.

Das beschriebene erfindungsgemäße Rotorblatt ist Teil eines Rotors einer Windenergieanlage.

Figur 6 zeigt ein Rotorblatt 10 mit einem erfindungsgemäßen Randbogen 30, der von der Saugseite 24 des Rotorblattes 10 weg, also zur Druckseite des Rotorblattes 10 hin verläuft. Die Oberkante 36 des Randbogens weist eine möglichst geringe Profildicke auf, um den sich dort ablösenden Randwirbel so gering wie möglich zu halten, damit eine ebenfalls möglichst geringe Schallemission entsteht.

Der Randbogen 30 ist bevorzugt in einem Winkel von ca. 60° bis 90° aus der Horizontalen abgebogen. D. h., er schließt mit dem Rotorblatt einen Winkel zwischen 120° und 90° ein. Dieser Bereich wird durch zwei aufwärts abgebogene Abschnitte 30, 31 dargestellt, von denen einer mit einer gestrichelten Linie dargestellt ist.

In Figur 7 ist eine erste Ausführungsform des erfindungsgemäßen Randbogens 30 in der Vorderansicht dargestellt. In dieser Figur verläuft die Hinterkante 34 des Randbogens 30 sowie die Oberkante 36 des Randbogens geradlinig, während die Vorderkante 32 zwischen der Rotorblatt-Vorkante 26 und der Randbogen-Oberkante 36 von der Saugseite 24 des Rotorblattes weg mit einem vorgegebenen Winkel verläuft. Dadurch verkürzt sich die Randbogen-Oberkante 36 gegenüber der Tiefe des Rotorblattes, erkennbar an der Rotorblatt-Saugseite 24. Das Rotorblatt hat also bis zum Randbogen 30 hin seine aerodynamisch voll wirksame Tiefe und geht erst im Randbogen 30 in eine kürzere Randbogen-Oberkante 36.

Gleichzeitig wird der an der Rotorblatt-Oberkante 36 abreißende Randwirbel aus der Ebene des Rotorblattes 10 herausgeführt, so dass der Randwirbel von der Blattebene weggeführt wird.

Figur 8 zeigt eine alternative Ausführungsform des in Figur 7 gezeigten Randbogens. Während in Figur 7 eine im Wesentlichen senkrecht zur Rotorblattlängsachse verlaufende Randbogen-Hinterkante 34 dargestellt ist, ist auch dieser Randbogen in Figur 8 in Richtung der Hinterkante 34 gefeilt. Durch diese Feilung wird der Ablösepunkt 37, in dem sich die Strömung von diesem Randbogen löst, noch weiter nach hinten verlegt und entsprechend wird die Energie der Randwirbel noch weiter verteilt und die Schallemission ist noch weiter verringert.

Das Wirkprinzip ist bei der in Figur 9 gezeigten Ausführungsform des Randbogens 30 ähnlich. Allerdings ist dieser Randbogen 30 auf einen möglichst geringen Randwirbel hin optimiert. Dazu verlaufen die Randbogen-Vorderkante 32 und die Randbogen-Hinterkante 34 mit einer vorgegebenen geschwungenen, besonders bevorzugt elliptischen Steigung zu der Randbogen-Oberkante 36 hin. Dabei ist die Randbogen-Oberkante 36 wiederum von der Rotorblatt-Saugseite 24 fort, also zu der Druckseite hin aus der Rotorblattebene abgebogen.

Durch die elliptische Ausbildung der Randbogen-Vorderkante 32 und der Randbogen-Hinterkante 34 wird gleichzeitig die Strecke verlängert, auf welcher sich die Strömung vom Rotorblatt löst. Dies führt ebenfalls zu einer verringerten Schallemission, da eine Umströmung der Blattspitze anders als bei stumpf auslaufenden Blattgeometrien weitestgehend entfällt.

Das Verhältnis von Tiefe zu Höhe (die Tiefe ist in Fig. 9 in der Aufsicht die Breite) des abgewinkelten Abschnitts des Randbogens beträgt etwa 1:0,8 bis 1,2, bevorzugt 1:1. Das Verhältnis der Höhe des abgewinkelten Abschnitts des Randbogens zur Tiefe des Rotorblatts am Anschluss des Randbogens beträgt etwa 1:1 bis 1:1,3, bevorzugt 1:1,14. Dabei ist der Tiefenverlauf im abgewinkelten Abschnitt des Randbogens annähernd hyperbolisch (in der Aufsicht die Profilbreite) und der oberste Kappenpunkt des äußersten Profilschnittes liegt bei etwa 30 bis 40%, bevorzugt 33% Profiltiefe, bezogen auf die Fädelachse des Blattes.

Figur 10 zeigt ein Rotorblatt 10 mit einer Kombination aus abgebogenem Endbereich 12 und daran anschließenden Randbogen 30. Dabei ist die Abbiegung des Endbereiches 12 von der Vorderkante 26 des Rotorblattes hin zu der Hinterkante 20 sowie eine Abbiegung des Randbogens 30 aus der Rotorblattebene heraus deutlich erkennbar. Entsprechend vereinigen sich hier die vorteilhaften akustischen Wirkungen des abgebogenen Endbereichs 12 einerseits und des abgewinkelten Randbogens 30 andererseits.

Das beschriebene erfindungsgemäße Rotorblatt ist Teil eines Rotors einer Windenergieanlage.

## Patentansprüche

1. Rotorbleitspitze eines Rotorblatts einer Windenergieanlage,
wobei das Rotorblatt ein eine Druck- und eine Saugseite aufweisendes aerodynamisches Profil aufweist,
wobei die Rotorblattspitze in ihrem Außenbereich In Richtung der Druckseite des Rotorblattes abgebogen oder abgewinkelt ist,
**dadurch gekennzeichnet, dass** sich die Rotorblattspitze in ihrem Außenbereich zur Randbogenoberkante hin verjüngt und eine Randbogenvorderkante (32) und eine Randbogenhinterkante (34) aufweist und die Randbogenvorderkante und die Randbogenhinterkante gleichermaßen in einer vorgegebenen, gosohwungenen, elliptischen Steigung zu der Randbogenoberkante (36) hin verlaufen.

2. Rotorblattspitze nach Anspruch 1,
**dadurch gekennzeichnet, dass** das Rotorblattprofil im Bereich der Biegung fließend in das Profil des Außenbereichs übergeht.

3. Rotorblattspitze nach Anspruch 1 oder 2,
**dadurch gekennzeichnet, dass** die Querschnittsebene des Außenbereiche in einem vorgegebenen Winkel zu der Querschnittsebene des übrigen Rotorblattes (10) verläuft.

4. Rotorblattspitze nach einem der Ansprüche 1 bis 3,
dadurch gekenntzeichnet, dass die Rotorblattspitze (30) als selbständiges, in das Rotorblatt (10) einsetzbares Teil ausgestaltet ist.

5. Rotorbtattspitze nach einem der Ansprüche 1 bis 4,
**dadurch gekennzeichnet, dass** die Rotorblattspitze (30) einen im Querschnitt verringerten Bereich zum Einsetzen in das Rotorblatt (10) aufweist.

6. Rotorblattspitze nach Anspruch 5,
**dadurch gekennzeichnet, dass** in dem im Querschnitt verringerten Bereich wenigstens eine Aussparung vorhanden ist

7. Rotorblattspitze nach einem der Ansprüche 1 bis 6,
dadurch gekenntzeichnet, dass die Rotorblattspitze (30) hohl ausgeführt ist.

8. Rotorblattspitze nach Anspruch 7,
**dadurch gekennzeichnet, dass** an ihrem der Anströmung abgewandten Ende eine Öffnung zum Entwässern vorhanden ist,

9. Rotorblaüspitze nach Anspruch 8,
**dadurch gekennzeichnet, dass** sich an die Öffnung ein Röhrchen anschließt.

10. Rotorblattspitze nach einem der Ansprüche 1 bis 9,
**dadurch gekennzeichnet, dass** sie aus Metall, insbesondere Aluminium, besteht.

11. Rotorblatt mit einer Rotorblattspitze nach einem der Ansprüche 1 bis 10.

12. Rotorblatt mit einer Rotorblattspitze nach einem der Ansprüche 1 bis 10. **dadurch gekennzeichnet, dass** das Rotorblatt (10) aus glasfaserverstärktem Kunststoff besteht und dass leitfähige Elemente zum Blitzableiten in das Rotorblatt (10) eingearbeitet sind, die mit der Rotorblattspitze (30) in leitendem Kontakt stehen.

13. Windenergieanlage mit einem Rotor, der mit wenigstens einem Rotorblatt nach einem der vorhergehenden Ansprüche ausgestattet ist.

## Claims

1. A rotor blade tip of a rotor blade of a wind power installation,
wherein the rotor blade has an aerodynamic profile having a pressure side and a suction side,
wherein the rotor blade tip is curved or angled in its outer region in the direction of the pressure side of the rotor blade,
**characterised in that** in its outer region the rotor blade tip narrows towards the edge arc upper edge, and has an edge arc leading edge (32) and an edge arc trailing edge (34), and the edge arc leading edge and the edge arc trailing edge extend equally in a predetermined, curved, elliptical gradient to the edge arc upper edge (36).

2. A rotor blade tip according to claim 1,
**characterised in that** in the region of the curve the rotor blade profile blends fluidly into the profile of the outer region.

3. A rotor blade tip according to claim 1 or 2,
**characterised in that** the cross-sectional plane of the outer region extends at a predetermined angle relative to the cross-sectional plane of the rest of the rotor blade (10).

4. A rotor blade tip according to any one of claims 1 to 3,
**characterised in that** the rotor blade tip (30) is in the form of an independent portion which can be inserted into the rotor blade (10).

5. A rotor blade tip according to any one of claims 1 to 4,
**characterised in that** the rotor blade tip (30) has a region of reduced cross-section for insertion into the rotor blade (10).

6. A rotor blade tip according to Claim 5,
**characterised in that** at least one opening is present in the region of reduced cross-section.

7. A rotor blade tip according to any one of claims 1 to 6,
**characterised in that** the rotor blade tip (30) is hollow.

8. A rotor blade tip according to claim 7,
**characterised in that** an opening for water drainage is present at its end remote from the oncoming flow.

9. A rotor blade tip according to claim 8,
**characterised in that** the opening is adjoined by a small tube.

10. A rotor blade tip according to any one of claims 1 to 9,
**characterised in that** it consists of metal, especially aluminium.

11. A rotor blade having a rotor blade tip according to any one of claims 1 to 10.

12. A rotor blade having a rotor blade tip according to any one of claims 1 to 10, **characterised in that** the rotor blade (10) consists of glass fibre-reinforced plastics material and that conductive elements for lightning conduction are incorporated into the rotor blade (10) and are in conductive contact with the rotor blade tip (30).

13. A wind power installation having a rotor provided with at least one rotor blade according to any one of the preceding claims.

## Revendications

1. Pointe de pale de rotor d'une pale de rotor pour une installation d'énergie éolienne,
dans laquelle la pale de rotor présente un profil aérodynamique présentant une face de pression et une face d'aspiration,
dans laquelle la pointe de pale de rotor est courbée ou coudée en direction de la face de pression de la pale de rotor dans sa région extérieure,
**caractérisée en ce que** la pointe de pale de rotor s'amincit dans sa région extérieure en direction de l'arête supérieure de l'arc de bord et présente une arête avant (32) de l'arc de bord et une arête arrière (34) de l'arc de bord et l'arête avant de l'arc de bord et l'arête arrière de l'arc de bord s'étendent de manière identique en direction de l'arête supérieure (36) de l'arc de bord avec une pente courbe elliptique prédéterminée.

2. Pointe de pale de rotor selon la revendication 1, **caractérisée en ce que** le profil de pale de rotor évolue dans la région de la courbure progressivement vers le profil de la région extérieure.

3. Pointe de pale de rotor selon la revendication 1 ou 2, **caractérisée en ce que** le plan de la section transversale de la région extérieure s'étend sous un angle prédéterminé par rapport au plan de la section transversale du reste de la pale de rotor (10).

4. Pointe de pale de rotor selon l'une quelconque des revendications 1 à 3, **caractérisée en ce que** la pointe de pale de rotor (30) est réalisée comme une pièce autonome, à insérer dans la pale de rotor (10).

5. Pointe de pale de rotor selon l'une quelconque des revendications 1 à 4, **caractérisée en ce que** la pointe de pale de rotor (30) présente une région de section transversale réduite pour l'insertion dans la pale de rotor (10).

6. Pointe de pale de rotor selon la revendication 5, **caractérisée en ce qu'**il se trouve au moins une découpe dans la région de section transversale réduite.

7. Pointe de pale de rotor selon l'une quelconque des revendications 1 à 6, **caractérisée en ce que** la pointe de pale de rotor (30) est réalisée sous forme creuse.

8. Pointe de pale de rotor selon la revendication 7, **caractérisée en ce qu'**il se trouve une ouverture de drainage à son extrémité opposée au côté de soufflage.

9. Pointe de pale de rotor selon la revendication 8, **caractérisée en ce qu'**un petit tube se raccorde à l'ouverture.

10. Pointe de pale de rotor selon l'une quelconque des revendications 1 à 9, **caractérisée en ce qu'**elle est constituée de métal, en particulier d'aluminium.

11. Pale de rotor avec une pointe de pale de rotor selon l'une quelconque des revendications 1 à 10.

12. Pale de rotor avec une pointe de pale de rotor selon l'une quelconque des revendications 1 à 10, **caractérisée en ce que** la pale de rotor (10) se compose de matière plastique renforcée de fibres de verre et **en ce que** des éléments conducteurs, qui sont en liaison électrique avec la pointe de pale de rotor (30), sont incorporés dans la pale de rotor (10) pour l'évacuation de la foudre.

13. Installation d'énergie éolienne avec un rotor, qui est équipé d'au moins une pale de rotor selon l'une quelconque des revendications précédentes.
